(19) Europäisches Patentamt
European Patent Office
Office européen des brevets

(11) Veröffentlichungsnummer: **0 512 523 B1**

# (12) EUROPÄISCHE PATENTSCHRIFT

(45) Veröffentlichungstag der Patentschrift: **15.11.95**

(21) Anmeldenummer: **92107677.4**

(22) Anmeldetag: **07.05.92**

(51) Int. Cl.$^6$: **C09D 175/04**, C09D 151/08, //(C09D175/04,151:08), (C09D151/08,175:04)

## (54) Physikalisch trocknendes Ueberzugsmittel auf wässriger Basis, dessen Herstellung und dessen Verwendung.

(30) Priorität: **08.05.91 DE 4115042**

(43) Veröffentlichungstag der Anmeldung:
**11.11.92 Patentblatt 92/46**

(45) Bekanntmachung des Hinweises auf die Patenterteilung:
**15.11.95 Patentblatt 95/46**

(84) Benannte Vertragsstaaten:
**AT BE CH DE ES FR GB GR IT LI NL PT SE**

(56) Entgegenhaltungen:
**EP-A- 0 073 392**
**EP-A- 0 260 447**

(73) Patentinhaber: **Herberts Gesellschaft mit beschränkter Haftung**
**Christbusch 25**
**D-42285 Wuppertal (DE)**

(72) Erfinder: **Brock, Thomas, Dr.**
**Kallweg 2**
**W-5030 Hürth (DE)**
Erfinder: **Patzschke, Hans-Peter, Dr.**
**Am Heckendorn 71**
**W-5600 Wuppertal 2 (DE)**
Erfinder: **Sadowski, Fritz, Dr.**
**Am Mühlenacker 35**
**W-5024 Pulheim 2 (DE)**

(74) Vertreter: **Türk, Gille, Hrabal, Leifert**
**Brucknerstrasse 20**
**D-40593 Düsseldorf (DE)**

EP 0 512 523 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft physikalisch trocknende Überzugsmittel auf wäßriger Basis, die insbesondere für die Herstellung von unifarbenen Überzügen geeignet sind.

Wäßrige Überzugsmittel sind zur Herstellung von Basisschichten mehrschichtiger Überzüge bekannt. Beispielsweise werden in der EP-A-0 089 497 wasserverdünnbare Überzugsmittel auf der Basis von Polyurethandispersionen beschrieben, die nach einem bestimmten Aufbauverfahren aus Polyether- und/oder Polyesterdiolen, Diisocyanaten, Verbindungen mit zwei gegenüber Isocyanat reaktiven Gruppen und mindestens einer anionischen Gruppe, Di- und/oder Polyaminen, hergestellt werden. Derartige Überzugsmittel werden, gegebenenfalls nach Überschichtung mit einem Decklack, bei erhöhter Temperatur von beispielsweise 130 bis 150 °C eingebrannt.

In der älteren deutschen Patentanmeldung DE-A 39 36 794 werden wäßrige Überzugsmittel für Metalliclackierungen beschrieben, die Polyurethane mit Carbonatgruppierungen aufweisen. Die Überzugsmittel können weitere Bindemittel, wie Polyacrylate und Polyester sowie Vernetzungsmittel, wie Melaminharze, enthalten. Ihre Härtungstemperaturen liegen in der Größenordnung von 80 °C.

In Industrie und Gewerbe besteht jedoch auch ein Bedürfnis nach physikalisch trocknenden Überzugsmitteln, die insbesondere zur Reparaturlackierung von verschiedenen Substraten, wie Metallgegenständen, insbesondere auf dem Kraftfahrzeugsektor oder zur Lackierung von Maschinen geeignet sind. Für derartige Zwecke sind Überzugsmittel erforderlich, die bei Raumtemperatur oder bei geringfügigem Erwärmen, beispielsweise auf bis zu 60 °C, trocknen bzw. härten.

Derartige physikalisch trocknende überzugsmittel, die beispielsweise für Reparaturlackierungen von Kraftfahrzeugen geeignet sind, sind bekannt, beispielsweise aus der DE-Patentschrift 29 24 632. Es handelt sich dabei jedoch um nicht-wäßrige Systeme auf der Basis organischer Lösungsmittel.

Aufgabe der Erfindung ist die Bereitstellung eines physikalisch trocknenden überzugsmittels auf wäßriger Basis.

Es hat sich gezeigt, daß diese Aufgabe durch das den Gegenstand der Erfindung bildende Überzugsmittel gelöst werden kann, das enthält 5 bis 30 Gew.-% eines Bindemittels, bei dem es sich um ein Gemisch handelt aus

A) 10 bis 90 Gew.-%, bevorzugt 50 bis 90 Gew.-% eines oder mehrerer Carbonatgruppierungen enthaltender Polyurethane, mit einer Glasübergangstemperatur von < 0 °C, bevorzugt < -10 °C, besonders bevorzugt < -20 °C, in Form einer wäßrigen Dispersion, und

B) 10 bis 90 Gew.-%, bevorzugt 10 bis 50 Gew.-% eines oder mehrerer ungesättigter Reaktionsprodukte von carboxyfunktionellen Polykondensaten und $\alpha,\beta$-olefinisch ungesättigten Monomeren mit einer Glasübergangstemperatur von > 0 °C, bevorzugt > 10 °C, besonders bevorzugt > 20 °C, in Form einer wäßrigen Dispersion,

wobei sich die Gewichtsprozente der Komponenten A) und B) jeweils auf den Bindemittelfestkörper beziehen und auf 100 Gew.-% addieren,
40 bis 85 Gew.-% Wasser,
1 bis 20 Gew.-% eines oder mehrerer organischer Lösemittel,
2 bis 25 Gew.-% eines oder mehrerer färbender und/oder effektgebender Pigmente,
Neutralisationsmittel zur Erzielung eines Neutralisationsgrades der neutralisierten Gruppen des Bindemittels von 40 bis 120 %,
sowie gegebenenfalls übliche Additive und Hilfsstoffe,
wobei die Bindemittelkomponente

A) erhältlich ist durch Umsetzung von

a) 10 bis 40 Gew.-% eines oder mehrerer organischer Polyisocyanate, die keine hydrophilen oder in hydrophile Gruppen überführbare Gruppen aufweisen,

b) 40 bis 80 Gew.-% einer oder mehrerer höhermolekularer organischer Polyhdroxylverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,

c) 0,2 bis 18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

d) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen und

e) 1 bis 12 Gew.-% einer oder mehrerer Verbindungen, die neben mindestens einer ionischen Gruppe oder mindestens einer in eine ionische Gruppe überführbaren Gruppe mindestens ein gegenüber

Isocyanatgruppen reaktionsfähiges Wasserstoffatom aufweisen,

und die Bindemittelkomponente

B) erhältlich ist durch Umsetzung von

i) 5 bis 95 Gew.-% eines carboxyfunktionellen Polykondensats, das zusätzlich Epoxygruppen enthält,

ii) 95 bis 5 Gew.-% mindestens eines copolymerisierbaren $\alpha,\beta$-olefinisch ungesättigten Monomeren, und

iii) 0 bis 20 Gew.-% üblicher Hilfsstoffe für die Polymerherstellung, wobei sich die Mengenangaben der Bestandteile i) bis iii) auf den Festkörperanteil der Komponente b) beziehen und ihre Summe stets 100 Gew.-% beträgt.

Bevorzugt liegt die Summe der Glasübergangstemperaturen der Bindemittelkomponenten A) und B) über 0 °C, besonders bevorzugt über 20 °C.

Die erfindungsgemäßen Überzugsmittel enthalten als Bindemittelkomponente A) ein oder mehrere Polyurethane, die Carbonatgruppierungen enthalten. Diese Polyurethane können gegebenenfalls auch Harnstoffgruppierungen enthalten, so daß es sich auch um Polyurethanharnstoffe handeln kann.

Bevorzugt weisen die als Komponente A) eingesetzten Polyurethane mindestens 200 Milliäquivalente pro 100 g Feststoff an chemisch eingebauten Carbonatgruppierungen -O-CO-O- auf. Sie enthalten bevorzugt nicht mehr als insgesamt 320 Milliäquivalente pro 100 g Feststoff an chemisch eingebauten Urethangruppierungen -NH-CO-O- und gegebenenfalls chemisch eingebauten Harnstoffgruppierungen -NH-CO-NH-. Beispiele für derartige verwendbare Polyurethane sind in der DE-Patentanmeldung 39 36 794.0 vom 4. November 1989 beschrieben.

Die Komponente A) der erfindungsgemäßen Überzugsmittel ist erhältlich durch Umsetzung der vorstehend definierten Komponenten a), b), c) gegebenenfalls d), und e). Die Komponente a) wird in einer Menge von 10 bis 40 Gew.-%, bevorzugt 15 bis 35 Gew.-%, jeweils bezogen auf den Festkörpergehalt der Komponente A), eingesetzt. Als typische Beispiele der verwendbaren organischen Polyisocyanate können multifunktionelle Isocyanate verwendet werden, wie aliphatische, cycloaliphatische und/oder aromatische Polyisocyante mit mindestens zwei Isocyanatgruppen pro Molekül und einer Molmasse von 112 bis 1000, vorzugsweise 140 bis 400. Sie enthalten als funktionelle Gruppen bevorzugt zwei Isocyanatgruppen, die im Molekül asymmetrisch oder symmetrisch angeordnet sind. Bevorzugt werden die Isomeren oder Isomerengemische von organischen Diisocyanaten. Als aromatische Diisocyanate eignen sich Phenylendiisocyanat, Toluylendiisocysnat, Xylylendiisocyanat, Biphenylendiisocyanat, Naphthylendiisocyanat und Diphenylmethandiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat, und Dicyclohexylmethandiisocyanat. Aliphatische Diisocyanate sind Verbindungen der Formel

$$O{=}C{=}N{-}\left(CR_2\right)_r{-}N{=}C{=}O$$

worin r eine ganze Zahl von 2 bis 20, inbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexyl-methandiisocyanat. Die zur Bildung des Präpolymeren gebrauchte Polyisocyanat-Komponente kann auch einen Anteil höherwertiger Polyisocyanate enthalten, vorausgesetzt sie wird nicht durch Gelbildungen beeinträchtigt. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan.

Die mittlere Funktionalität kann gegebenenfalls durch Zusatz von Monosiocyanaten gesenkt werden. Beispiele für solche kettenabbrechenden Monoisocyanate sind Phenylisocyanat, Cyclohexylisocyanat und Stearylisocyanat.

Die zur Herstellung der Bindemittelkomponente A) verwendete Komponente b) wird in Mengen von 40 bis 80 Gew.-%, bevorzugt 45 bis 75 Gew.-%, jeweils bezogen auf den Gesamt-Festkörper der Komponente A), eingesetzt. Bei der Komponente b) handelt es sich vorzugsweise um organische Polyhydroxylverbindungen mit einer Molmasse von 300 bis 5000, vorzugsweise 500 bis 3000, wobei sich die Komponente b) zumindest zu 50 Gew.-%, vorzugsweise zu mehr als 70 Gew.-% aus Polyhydroxypolycarbonaten dieses Molekulargewichtsbereichs zusammensetzt. Unter diesen erfindungswesentlichen Aufbaukomponenten sind Ester der Kohlensäure zu verstehen, die durch Reaktion von Kohlesäurederivaten, z.B. Diphonylcarbonat oder Phosgen, mit Diolen erhalten wurden. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, ferner Diethylenglykol, Tri- und Tetraethylenglykol, Dipropylenglykol, Polypropylenglykole, Dibutylenglykol, Polybutylenglykole, Bisphenol A, Tetrabrombisphenol A in Frage. Vorzugsweise enthält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit ≥1 Mol, bevorzugt 1 bis 2 Mol Caprolacton gemäß DE-AS 17 70 245, oder durch Veretherung von Hexandiol mit sich selbst zum Di- oder Trihexylenglykol erhalten wurden. Die Herstellung solcher Derivate ist z.B. aus DE-AS 1 570 540 bekannt. Auch die in DE-OS 37 17 060 beschriebenen Polyether-Polycarbonatdiole können sehr gut eingesetzt werden.

Die Hydroxylpolycarbonate sollen im wesentlichen linear sein. Sie können jedoch gewünschtenfalls durch den Einbau polyfunktioneller Komponenten, insbesondere niedermolexularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit, Methylglykosid, 1,4,3,6-Dianhydrohexite.
Neben diesen Polyhydroxypolycarbonaten kann die Aufbaukomponente b) auch andere, aus der Polyurethanchemie an sich bekannte, Polyhydroxylverbindungen des genannten Molekulargewichtsbereichs enthalten wie z.B.

1. die in der Polyurethanchemie an sich bekannten Dihydroxypolyester aus Dicarbonssäuren, z.B. Bernsteinsaure, Adipinsäure, Korksäure, Azelainsäure, Sebacinsäure, Phthalsäure, Isophthalsäure, Terephthalsäure, Tetrahydrophthalsäure usw. und Diolen, wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder die verschiedenen isomeren Bishydroxymethylcyclohexane;
2. die in der Polyurethanchemie an sich bekannten Polylactone, wie z.B. die auf den obengenannten zweiwertigen Alkoholen gestarteten Polymerisate des $\epsilon$-Caprolactons;
3. die in der Polyurethanchemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, daß das resultierende Polyetherdiol maximal 10 Gew.-% an Ethylenoxideinheiten enthält.

Vorzugsweise werden solche Polyetherdiole mitverwendet, die ohne Mitverwendung von Ethylenoxid, d.h. insbesondere unter ausschließlicher Verwendung von Propylenoxid und Tetrahydrofuran erhalten wurden.

Bei der Herstellung der Bindemittelkomponente A) kann gegebenenfalls die Komponente c) mitverwendet werden. Wird sie eingesetzt, so erfolgt dies bevorzugt in Mengen von 0,2 bis 18 Gew.-%, besonders bevorzugt von 0,5 bis 10 Gew.-%, bezogen auf den Festkörper der Komponente A). Bei der gegebenenfalls mitzuverwendenden Komponente c) handelt es sich um die aus der Polyurethanchemie an sich bekannten niedermolekularen mindestens difunktionellen Hydroxyl- und/oder Aminogruppen aufweisenden Verbindungen mit Molmassen von 60 bis 400. Sie dienen während der Isocyanataddition als Kettenverlängerer (beim Einsatz difunktioneller Verbindungen) oder als Vernetzer (beim Einsatz von trifunktionellen oder mehrfunktionellen Verbindungen) und sind so aufgebaut, daß die funktionellen Gruppen über aliphatische, alicyclische oder aromatische Reste verbunden sind. Beispielsweise können Mengen bis zu 30 Gew.-% der gesamten Polyol-Bestandteile, vorzugsweise etwa 2 bis 20 Gew.-%, eingesetzt werden. Im folgenden sind Beispiele für verwendbare niedermolekulare Polyole und Polyamine angegeben.

Vorteilhaft haben die niedermolekularen Polyole bis zu etwa 20 Kohlenstoffatome im Molekül, wie Etyhlenglykol, Diethylenglykol, Triethylenglykol, 1,2-Propandiol, 1.3-Propandiol, 1.4-Butandiol, 1,2-Butylenglykol, 1.6-Hexandiol, Trimethylolpropan, Ricinusöl oder hydriertes Ricinusöl , Di-trimethylolpropanether, Pentaerythrit, 1.2-Cyclohexandiol, 1.4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen.

Polyamine sind im wesentlichen Alkylen-Polyamine mit 1 bis 30 Kohlenstoffatomen, vorzugsweise etwa 2 bis 12 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1.4-Butylendiamin, Piperazin, 1.4-Cyclohexyldimethylamin, Hexamethylendiamin-1.6, Trimethylhexamethylendiamin, Methandiamin, Isophorondiamin, 4.4'-Diaminodicyclohexylmethan und Aminoethylethanolamin. Bevorzugte Diamine sind Alkyl- oder Cycloalkyldiamine wie Propylendiamin und 1-Amino-3-aminomethyl-3.5.5-trimethylcyclohexan. Die Kettenverlängerung kann auch mit Hydrazin erfolgen. Neben dem Hydrazin können die Ketten auch mit substituierten Hydraziden, wie Monoalkyl- oder Monoarylhydrazid oder Bishydraziden, wie beispielsweise Adipinsäure-bis-hydrazid, verlängert werden.

Die Kettenverlängerung kann wenigstens teilweise mit einem Polyamin erfolgen, das mindestens drei Amingruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetraamin, Dipropylentriamin und Dibutylentriamin. Bevorzugte Polyamine sind die Alkyl- oder Cycloalkyltriamine wie Diethylentriamin. Um ein Gelieren bei der Kettenverlängerung zu verhindern, können auch kleine Anteile von Monoaminen wie Ethylhexylamin zugesetzt werden.

Zum Aufbau der Bindemittelkomponente A) kann gegebenenfalls auch die Komponente d) verwendet werden; bevorzugt werden dazu Mengen von 0 bis 8 Gew.-%, besonders bevorzugt 0,5 bis 6 Gew.-%, bezogen auf den Festkörper der Komponente A), eingesetzt.

Bei den hydrophilen Aufbaukomponenten d) handelt es sich um innerhalb von Polyetherketten eingebaute Ethylenoxideinheiten aufweisende Verbindungen und zwar um

d1) Diisocyanate und/oder im Sinne der Isocyanatpolyadditionsreaktion difunktionelle Verbindungen mit gegenüber Isocyanatgruppen reaktionsfähigen Wasserstoffatomen mit seitenständigen, Ethylenoxid-Einheiten aufweisenden Polyetherketten,

d2) Monoisocyanate und/oder im Sinne der Isocyanat-Polyadditionsreaktion monofunktionelle Verbindungen mit gegenüber Isocyanatgruppen reaktionsfähigen Wasserstoffatomen mit Ethylenoxideinheiten aufweisenden Polyetherketten oder um Gemische von Verbindungen d1) und d2).

Zu den Aufbaukomponenten d1) gehören insbesondere Verbindungen der allgemeinen Formel (I)

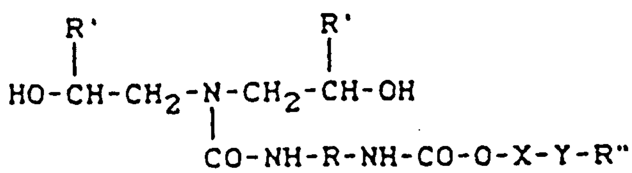

(I)

und/oder Verbindungen der allgemeinen Formel (II)

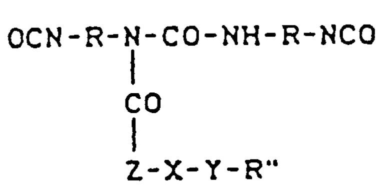

(II)

Zu den Verbindungen d2) gehören insbesondere solche der allgemeinen Formel (III)

HO-X-Y-R" (III)

der Formel (IV)

HR'N-X-Y-R" (IV)

und/oder Verbindungen der allgemeinen Formel (V)

$$OCN-R-\overset{H}{N}-CO-Z-X-Y-R'' \qquad (V)$$

In diesen Formeln (I) bis (V) stehen

- R für einen zweiwertigen Rest, wie er durch Entfernung der Isocyanatgruppen aus einem Diisocyanat der Formel $R(NCO)_2$ der vorstehend genannten Art erhalten wird (R entspräche dann dem vorstehend genannten Rest Q),
- R' für Wasserstoff oder einen einwertigen Kohlenwasserstoffrest mit 1 bis 8 Kohlenstoffatomen, vorzugsweise für Wasserstoff oder eine Methylgruppe,
- R'' f+r einen einwertigen Kohlenwasserstoffrest mit 1 bis 12 Kohlenstoffatomen, vorzugsweise einen unsubstituierten Alkylrest mit 1 bis 4 Kohlenstoffatomen,
- X für den Rest, wie er durch Entfernen des endständigen Sauerstoffatoms aus einer Polyalkylenoxidkette mit 5 bis 90, vorzugsweise 20 bis 70 Kettengliedern erhalten wird, welche Kettenglieder zumindest zu 40 %, vorzugsweise zumindest zu 65 % aus Ethylenoxid-Einheiten bestehen und die neben Ethylenoxid-Einheiten auch Propylenoxid-, Butylenoxid- oder Styroloxid-Einheiten darstellen können, wobei unter den letztgenannten Einheiten Propylenoxid-Einheiten bevorzugt sind,
- Y für Sauerstoff oder -NR'''-, wobei R''' bezüglich seiner Definition R'' entspricht,
- Z für einen Rest, der in seiner Bedeutung der Definition von Y entspricht.

Die Herstellung dieser hydrophilen Aufbaukomponenten (I) bis (V) erfolgt in Analogie zu US-PS 3 920 598, US-PS 3 905 929, US-PS 4 190 566 oder US-PS 4 237 264.

Die zur Herstellung der Bindemittelkomponente A) verwendete Komponente e) wird in Mengen von 1 bis 12 Gew.-%, bevorzugt 1,5 bis 6 Gew.-%, eingesetzt. Bei der Komponente e) handelt es sich um Verbindungen, die zwei mit Isocyanatgruppen reagierende H-aktive Gruppen und mindestens eine zur Anionenbildung befähigte Gruppe enthalten. Geeignete mit Isocyanatgruppen reagierende Gruppen sind insbesondere Hydroxylgruppen, sowie primäre und/oder sekundäre Aminogruppen. Gruppen, die zur Anionenbildung befähigt sind, sind Carboxyl-, Sulfonsäure und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den Hydroxylgruppen des Moleküls reagieren. Bevorzugt werden Alkansäuren mit zwei Substituenten am $\alpha$-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxypropionsäure, Dihydbernsteinsäure und Dihydroxybenzoesäure. Eine besonder bevorzugte Gruppe von Dihydroryalkansäuren sind die $\alpha,\alpha$-Dimethylolalkansäuren, die durch die Strukturformel

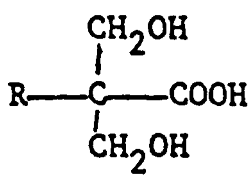

gekennzeichnet sind, worin R = Wasserstoff oder eine Alkylgruppe mit bis zu etwa 20 Kohlenstoffatomen bedeutet. Beispiele für solche Verbindungen sind 2.2-Dimethylolessigsäure, 2.2-Dimethylolpropionsäure, 2.2-Dimethylolbuttersäure und 2.2-Dimethylolpentansäure. Die bevorzugte Dihydroxyalkansäure ist 2.2-Dimethylolpropionsäure. Aminogruppenhaltige Verbindungen sind beispielsweise $\alpha,\delta$-Diaminovaleriansäure, 3.4-Diaminobenzoesäure, 2.4-Diaminotoluolsulfonsäure und 2.4-Diamino-diphenylethersulfonsäure. Das Carboxylgruppen enthaltende Polyol kann 3 bis 100 Gew.-%, vorzugsweise 5 bis 50 Gew.-% des gesamten Polyolbestandeiles im NCO-Präpolymeren ausmachen.

Die durch die Carboxylgruppen-Neutralisation in Salzform verfügbare Menge an ionisierbaren Carboxylgruppen

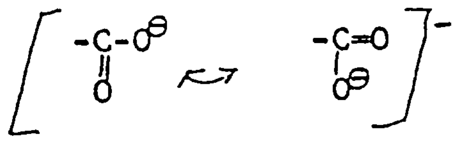

beträgt in allgemeinen wenigstens 0.4 Gew.-%, vorzugsweise wenigstens 0.7 Gew.-%, bezogen auf den Feststoff. Die obere Grenze beträgt etwa 6 Gew.-%. Die Menge an Dihydroxyalkansäuren im unneutralisierten Präpolymeren ergibt eine Säurezahl von wenigstens 5, vorzugsweise wenigstens 10. Die obere Grenze der Säurezahl liegt bei 60, vorzugsweise bei 40 bezogen auf Feststoff.

Die Menge der Komponente e) und der Neutralisationsgrad der mit der Komponente e) eingebauten ionischen Gruppen wird so bemessen, daß in dem letztendlich erhaltenen Polyurethan 0 bis 120, vorzugsweise 1 bis 80 Milliäquivalente pro 100 g Feststoff an ionischen Gruppen vorliegen, wobei die Gesamtmenge der Ethylenoxideinheiten und dar ionischen Gruppen innerhalb der genannten Bereiche so bemessen sein muß, daß die Dispergierbarkeit der Polyurethanpolyharnstoffe in Wasser gewährleistet ist.

Die im erfindungsgemäß verwendeten Bindemittel eingesetzte Komponente A) weist eine Glasübergangstemperatur von < 0 ° C, bevorzugt < - 10 ° C, besonders bevorzugt < -20 ° C, auf.

Die Herstellung der Polyurethan- bzw. Polyurethanharnstoff-Dispersionen der Komponente A) kann durch Umsetzung der Polyisocyanate, bevorzugt von Diisocyanaten, mit den Polyolen verschiedener Molmasse, bevorzugt Diolen, erfolgen, wobei gleichzeitig in einem Teil dieser Diole oder Diamine, bevorzugt Diole mit ionischen und/oder nicht-ionischen hydrophilen Gruppen eingebaut werden. Die Umsetzung der Ausgangskomponenten kann sowohl einals auch mehrstufig in gemischter oder sequenzierter Reihenfolge durchgeführt werden.

Bei der Umsetzung der Ausgangskomponenten a) bis e) kann gegebenenfalls ein gegenüber Isocyanatgruppen inertes, mit Wasser mischbares Lösungsmittel mitverwendet werden, so daß die Umsetzungsprodukte letztendlich in Form einer kolloiden Lösung in einem derartigen Lösungsmittel vorliegen. In diesem Zusammenhang bedeutet "Lösung" sowohl eine echte Lösung als auch eine Wasser-in-Öl-Emulsion, die dann entstehen kann, wenn beispielsweise einzelne der Aufbaukomponenten in Form von wäßrigen Lösungen zum Einsatz gelangen. Geeignete Lösungsmittel sind beispielsweise Aceton, Methylethylketon, N-Methylpyrrolidon oder beliebige Gemische derartiger Lösungsmittel. Die Menge dieser Lösungsmittel wird im allgemeinen so bemessen, daß 10 bis 70 gew.-%ige Lösungen der Umsetzungsprodukte aus den Ausgangskomponenten a) bis e) in dem Lösungsmittel anfallen.

Bei der einstufigen Herstellung der Polyurethanpolyharnstoffe werden vorzugsweise die Ausgangskomponenten mit gegenüber Isocyanatgruppen reaktionsfähigen Gruppen miteinander gemischt und mit den Isocyanatgruppen aufweisenden Ausgangskomponenten zur Reaktion gebracht, wobei vorzugsweise zunächst in Abwesenheit von Lösungsmitteln bei 50 bis 150 ° C liegenden Temperaturen gearbeitet wird, und wobei gegebenenfalls an sich bekannte Katalysatoren mitverwendet werden. Hierbei werden Art und Mengenverhältnisse der Ausgangskomponenten vorzugsweise so gewählt, daß ein Äquivalentverhältnis von Isocyanatgruppen zu gegenüber Isocyanatgruppen reaktionsfähigen Gruppen von 0,8:1 bis 1,05:1 vorliegt.

Im Verlauf der Reaktion steigt die Viskosität des Gemischs an, so daß der Mischung nach und nach eines der genannten Lösungsmittel zugegeben wird. Schließlich wird eine organische Lösung des ausreagierten Polyurethans erhalten, deren Konzentration bei ca. 10 bis 70, insbesondere 15 bis 55 Gew.-% Feststoff eingestellt wird.

Beim bevorzugten Zweistufenverfahren wird vorzugsweise zunächst in der Schmelze aus überschüssigen Mengen aus Isocyanatgruppen aufweisenden Ausgangskomponenten a) und gegebenenfalls d) und Hydroxylgruppen aufweisenden Ausgangskomponenten b), c), e) und gegebenenfalls d) unter Einhaltung eines NCO/OH-Äquivalentverhältnisses von 1,1:1 bis 3,5:1, vorzugsweise 1,2:1 bis 2,5:1 in Ab- oder Anwesenheit eines Lösungsmittels der beispielhaft genannten Art bei ca. 50 bis 150 ° C ein NCO-Prepolymer hergestellt, welches bei Abwesenheit von Lösungsmitteln anschließend in einem Lösungsmittel der beispielhaft genannten Art aufgenommen wird. Die so erhaltene Lösung wird dann mit weiteren Kettenverlängerungs- oder Vernetzungsmitteln c), die gegebenenfalls in Form wäßriger Lösungen eingesetzt werden, zur Umsetzung gebracht, wobei als Komponente c) vorzugsweise primäre und/oder sekundäre Aminogruppen aufweisende Aufbaukomponenten der oben beispielhaft genannten Art verwendet werden. Die Menge der in dieser zweiten Stufe verwendeten Aufbaukomponenten c) wird hierbei so bemessen, daß das Äquivalentverhältnis aller in erster und zweiter Stufe zum Einsatz gelangender Ausgangskomponenten den obengemachten Angaben entspricht.

Bei beiden Varianten (ein- oder zweistufig) resultieren letztendlich Lösungen der Umsetzungsprodukte in dem genannten Lösungsmittel mit einem Feststoffgehalt innerhalb der obengenannten Bereiche.

Die zumindest teilweise Überführung von gegebenenfalls vorliegenden potentiellen ionischen Gruppen in ionische Gruppen durch Quaternierung oder Neutralisation erfolgt zweckmäßigerweise vor der Zugabe des Dispergierwassers. Im Falle der bevorzugten Verwendung von Carboxylgruppen aufweisenden Aufbaukomponenten e), insbesondere von Dimethylolpropionsäure werden bevorzugt tertiäre Amine als Neutralisationsmittel eingesetzt. Der Zusatz des Neutralisationsmittels erfolgt entweder in Form des Salzes, beispielsweise des Dimethylolpropionsäuresalzes, oder nach der Herstellung des Isocyanatprepolymeren. Derartige tertiäre Amine sind beispielsweise Triethylamin, Tri-n-butylamin, N,N,N-Trimethylcyclohexylamin, N-Methylmorpholin, N-Methylpiperazin, N,N-Dimethylethanolamin, N-Methylpiperidin, Triethanolamin. Ebenfalls bevorzugt ist, unter Einhaltung der in EP-A-269 972 dargelegten Verfahrensbedingungen, die Verwendung von Ammoniak als Neutralisationsmittel für vorab eingebaute Carboxylgruppen.

Im Anschluß an die Zugabe des als Lösungsmittel bzw. als Dispergiermedium dienenden Wassers, dessen Menge im übrigen so bemessen wird, daß 10 bis 60, vorzugsweise 20 bis 45 gew.-%ige Dispersionen resultieren, erfolgt gegebenenfalls eine destillative Entfernung zumindest der Hauptmenge des verwendeten Hilfslösungsmittels.

Die Herstellung der Polyurethan-Polyharnstoffe kann auch nach anderen Varianten gemäß Stand der Technik erfolgen, beispielsweise indem man als Kettenverlängerungsmittel c) Hydrazin oder Diamine in blockierter Form, d.h. in Form der entsprechenden Azine bzw. Ketimine verwendet, wie dies in US-PS 4 269 748 bzw. US-PS 4 829 122 gelehrt wird.

Weiterhin ist es möglich, das sogenannte Prepolymer-Misch-Verfahren anzuwenden (vgl. D. Dieterich, Angew. Makromol. Chem. 98, 142 (1981)), indem zunächst in der oben beschriebenen Weise ein NCO-Prepolymer hergestellt wird und dieses nach zumindest teilweiser Überführung von gegebenenfalls vorliegenden potentiellen ionischen Gruppen in ionische Gruppen mit Wasser zu einer Emulsion vermischt wird. Die NCO-Gruppen des Prepolymeren werden danach in der wäßrigen Phase zur Reaktion gebracht, was durch Zusatz von aminischen Kettenverlängerungs- oder Vernetzungsmitteln c) und/oder durch Reaktion mit dem Wasser bewerkstelligt wird.

Bei der in den erfindungsgemäßen Überzugsmitteln eingesetzten Bindemittelkomponente B) handelt es sich bevorzugt um acrylierte Polyester. Unter acrylierten Polyestern werden, wie in DE-A-28 11 913, DE-A-33 01 729 und DE-A-35 44 337 beschrieben, Reaktionsprodukte verstanden, die herstellbar sind durch radikalische Emulsionspolymerisation von copolymerisierbaren $\alpha,\beta$-ungesättigten Monomeren in Gegenwart von linearen oder verzweigten carboxyfunktionellen Polyestern, die gegebenenfalls noch Epoxy-Gruppen enthalten.

Die Komponente B) kann hergestellt werden durch radikalische Emulsionspolymerisation von

i) 5 bis 95 Gew.-% eines carboxyfunktionellen Polymerisats in Form eines wäßrigen Systems mit

ii) 95 bis 5 Gew.-% mindestens eines copolymerisierbaren $\alpha,\beta$-olefinisch ungesättigten Monomeren in Gegenwart von

iii) 0 bis 20 Gew.-% anionischen oder nicht-ionischen Emulgatoren oder eines Gemisches von beiden, oder von Schutzkolloiden,

bezogen auf den Festkörperanteil der Komponenten i) bis iii), unter Zusatz von 0,01 bis 10 Gew.-% mindestens eines Polymerisationsinitiators, bezogen auf den Monomeranteil ii) in Gegenwart von weiteren üblichen Zusätzen bei einer Temperatur von 0 bis 150 °C, vorzugsweise über 20 °C und unter 90 °C.

Durch Wahl geeigneter Ausgangssubstanzen ist ein Einstellen von Polymerisateigenschaften innerhalb weiter Grenzen möglich. Beispielsweise können durch Polymerisation nicht vernetzend wirkender Vinylmonomerer in der wäßrigen Dispersion oder Lösung eines unvernetzten selbsthärtenden carboxyfunktionellen Polymeren wasserlösliche bzw. in Wasser dispergiefähige Polymerisate hergestellt werden. Dabei können beispielsweise die hydrophilen oder auch die hydrophoben Eigenschaften und die Härte bzw. die Flexibilität durch geeignete Wahl der Komponenten i) und ii) gezielt eingestellt werden. Weiterhin können durch den Einbau reaktiver Vinylmonomerer zunächst in Wasser dispergiefähige Polymerisate hergestellt werden, die dann bevorzugt nach dem Aufbringen auf ein Substrat über eine entsprechende Nachbehandlung in den vernetzten Zustand überführt werden.

Geeignete Polykondensate (Komponente i) werden in der Schmelze oder im azeotropen Kondensationsverfahren durch Umsetzung von Polycarbonsäuren und Polyalkolen, gegebenenfalls unter Zusatz von gesättigten oder ungesättigten Fettsäuren (Ölen) und/oder Epoxidverbindungen bei Temperaturen von 150 bis 260 °C erhalten. Sie haben eine solche Säurezahl, daß sie nach Neutralisieren in Wasser stabil dispergierbar sind.

Als polyfunktionelle Carbonsäuren werden lineare oder verzweigte aliphatische, cycloaliphatische und/oder aromatische mehrbasische Carbonsäuren, vorzugsweise Di-, Tri- und Tetracarbonsäuren mit 4 bis 12 Kohlenstoffatomen pro Molekül oder deren veresterungsfähige Derivate wie beispielsweise Anhydride oder Methanolester verwendet. Außer den schon bei den OH-Polyestern, die zur Herstellung von Polyurethanesterharzen verwendet werden, erwähnten Dicarbonsäuren werden beispielsweise Phthalsäureanhydrid, Tetrahydrophthalsäureanhydrid, Tricarbonsäuren, wie Trimellithsäureanhydrid oder Maleinsäure-Addukte an isoliert oder konjugiert ungesättigte Fettsäure oder Tetracarbonsäure wie Pyromellithsäuredianhydrid oder aus Trimellithsäureanhydrid und Dialkanolen hergestellte Bis-anhydride eingesetzt. Um Funktionalität und Härte einzustellen, enthalten die gegebenenfalls ölfreien Polyester vorteilhaft auch kleine Mengen an einbasischen Säuren wie Benzoesäure, tert-Butylbenzoesäure, oder Abietinsäure. Es können jedoch auch hydroxylgruppenhaltige Carbonsäuren wie 5-Hydroxypentancarbonsäure oder ihr Lacton, Dimethylolpropionsäure, Salicylsäure, Weinsäure oder Cyclohexanol-monocarbonsäure eingeestart werden.

Als polyfunktionelle Alkohole werden bevorzugt lineare oder verzweigte aliphatische, cycloaliphatische und/oder araliphatische Alkohole mit 2 bis 6, vorzugsweise 2 bis 4 an nicht aromatische Kohlenstoffatome gebundene Hydroxylgruppen und 2 bis 4 Kohlenstoffatomen pro Molekül verwendet. Beispiele f solche Polyalkohole sind Glykole und Dialkanole wie sie schon für die OH-Polyester des Pastenharzes Verwendung finden. Um die Funktionalität zu steigern und Verzweigungen einzuführen, werden drei- oder höherwertige Polyalkohole eingesetzt wie Glycerin, Trimethylolpropan, Di- oder Trimethylolpropanether, Trimethylolethan, Pentaerythrit, Dipentaerythrit, 1.2.6-Hexantriol oder Trishydroxyethylisocyanurat. Die genannten Polyalkohole können in geringen Mengen durch einwertige Alkohole ersatzt werden. Die Auswahl der Alkoholkomponente richtet sich unter anderem nach dem gewünschten Gehalt an freien Hydroxylgruppen, nach der Menge eingesetzter Monocarbonsäure und der gewünschten Löslichkeit und Verdünnbarkeit. Die eingesetzten Polyester können gegebenenfalls mit Mono- oder Diisocyanaten teilweise urethanisiert sein.

Um die geeignete Wasserlöslichkeit zu erhalten, kann die Herstellung der Harze beim entsprechenden Kondensationsgrad abgebrochen werden oder es wird vorteilhafter ein höhermolekularer OH-gruppenhaltiger Polyester mit Säureanhydriden, bevozugt cycloaliphatischen Säureanhydriden umgesetzt. Einen ähnlichen Effekt erzielt man durch Reaktion mit Bisanhydriden, Trimellithsäureanhydrid, Trimellithsäure-monoalkylester oder Maleinsäureanhydrid-Addukten an isoliert oder konjugiert ungesättigte Fettsäuren. Ein anderes vorteilhaftes Verfahren ist das Senken der Säurezahl eines stark sauren Polyester-Prekondensates durch mindestens teilweise Umsetzung mit epoxidgruppenhaltigen Verbindungen wie dem Glycidylester der Versaticsäure (Cardura ® E-10), epoxidierten Leinöl oder. Sojaöl oder Polyglycidylethern. Bevorzugt verwendet wird als OH-Polymer ein Reaktionsprodukt mit einer mittleren Molmasse ($\overline{M}n$) von zweckmäßigerweise 2000 bis 100000 (Gelchromatographie gegen Polystyrol-Standard) und einer bevorzugten Säurezahl von 5 bis 150, bezogen auf Festharz, aus

a) einem Polyester oder einem Copolymerisat mit einer Hydroxyl-Zahl von 20 bis 300, besonders über 40 und unter 200, speziell über 50 und unter 130, bezogen auf Festharz,

b) einem Trimellithsäure-Einheiten enthaltenden Polycarbonsäureanhydrid-, gemisch mit einer Säurezahl von 10 bis. 1000, bevorzugt über 100 und unter 800, das durch Umsetzung von Trimellithsäureanhydrid mit bevorzugt zweiwertigen Alkoholen hergestellt wird, und

c) epoxidierten Ölen mit Epoxy-Zahlen von 1 bis 50, bevorzugt über 2 und unter 25, speziell über 3 und unter 15,

wobei das Äquivalentverhältnis von Carboxylgruppen zu Epoxid-Gruppen 3:1 3:1 bis 1:3, vorzugsweise 1,25:1 bis 1:1,25 und das Festkörper-Verhältnis von Bisanhydrid (b) zu OH-Polymer (a) zwischen 50:50 und 10:90, bevorzugt 40:60 bis 15:85 beträgt.

Aus dem so hergestellten Polyester (Komponente i)) wird bevorzugt nach Neutralisation eine wässrige Dispersion hergestellt, in der ein Gemisch ungesättigter Monomerer (Komponente ii)) polymerisiert wird. Um die besten Bedingungen für die Emulsionspolymerisation zu erreichen, wird dem laufenden Polymersationsansatz jedoch noch weiteres Wasser zugegeben.

Als $\alpha,\beta$-ungesättigte Monomere kommen praktisch alle radikalisch polymerisierbaren Monomeren in Frage, wobei jedoch die übllchen Einschränkungen für Copolymerisationen gelten, die durch das Q und e - Schema nach Alfrey und Price, bzw. die Copolymerisationaparameter vorgegeben sind. Die Auswahl der ungesättigten Monomeren, die keine weiteren reaktiven Gruppen enthalten, erfolgt nach den mechanischen und Verträglichkeitseigenschaften.

Geeignete $\alpha,\beta$-olefinisch ungesättigte Monomere (Komponente ii)) sind beispielsweise (Meth)-acrylatmonomere wie Methyl(meth)acrylat, Ethyl(meth)acrylat, Propyl(meth)acrylat, die verschiedenen isomere Butyl(meth)acrylate, isomere Octyl (meth)acrylate, z.B. 2-Ethylhexyl(meth)arcylat, (Meth)acrylamid, N-Methylol(meth)acrylmid, (Meth)acrylnitril und auch (Meth)acrylsäure selbst, vinylaromatische Monomere wie Styrol, $\alpha$-Methylstyrol, Vinyltoluol, Vinylpyridin, Vinylestermonomere wie Vinylacetat, Vinylester verzweigter ($C_9$-$C_{12}$)-Carbonsäuren wie Versaticsäurevinylester; Linolsaurevinylester, Ester, Halbester, Amide, Halbamide von $\alpha,\beta$-ethylenisch ungesättigten Mono- und Dicarbonsäuren wie Crotonsäure, Maleinsäure, Fumarsäure, Sorbinsäure, Monomere ungesättigter Halogenverbindungen wie Vinylchlorid, Vinylidenchlorid, (Meth)-

acrylester teilweise und/oder vollständig fluorierter Alkohole entsprechend der allgemeinen Formel

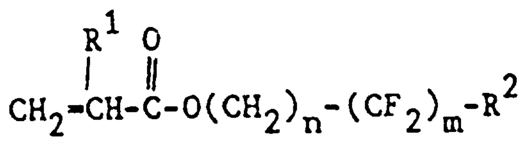

mit $R^1$ = H, $CH_3$; $R^2$ = H, F, n = 0-10 und m = 0-25, Hexafluoryropylen, Perfluorhexylethylen, 2-Hydroperfluorethylallylether und 2-Hydroperfluoryropylallylether, Monomere vom Typ mehrfach, vorzugsweise zwei bis dreifach ethylenisch ungesättigter Verbindungen wie Divinylbenzol, Ethandioldi(meth)acrylat, Propandioldi-(meth)acrylat, Butandioldi(meth)acrylat, Hexandioldi(meth)acrylat, Glycerintri(meth)acrylat, Pentaerythritoltri-(meth)acrylat und Diallylphthalat. Werden mehrfach ethylenisch ungesättigte Monomere eingesetzt, so beträgt ihre Menge im allgemeinen 0,01 bis 20 Gew.-%, bezogen auf die Gesamtmenge der Monomeren ii).

Es ist auch möglich, Monomere mit funktionellen Gruppen einzusetzen, z.B. mit solchen chemischen Gruppierungen, die im aufgebrachten Lack zu Vernetzungen führen können, wie Carbonsäure-, Sulfosäure-, Hydroxy-, Amino-, Amido-, Keto-, Aldehyd-, Lactam-, Lacton-, Isocyanat- und Epoxygruppen. Cokondensationsfähige bzw. copolymerisationsfähige Monomere, die derartige funktionelle Gruppierungen tragen sind bekannt. Der Einsatz hydrophiler Monomerer ist für die Durchführung der erfindungsgemäßen Polymerisationen möglich, aber nicht generall notwendig.

Eingesetzte Monomere, die Carbonsäuregruppierungen tragen, sind $\alpha,\beta$-ethylenisch ungesättigte Mono- und Dicarbonsäuren, wie z.B. Crotonsäure, Sorbinsäure, Itaconsäure, Fumarsäure, Maleinsäure, Maleinsäurehalbester, bzw. die Halbester der Itacon-, und der Fumarsäure, bevorzugt aber Acryl- und Methacrylsäure.

Ungesättigte Monomere, die zur Vernetzung geeignete Epoxidgruppierungen aufweisen, sind ungesättigte Glycidylester oder -ether z.B. Glycidylmethacrylat, Glycidylacrylat, Allylglycidylether, Alkylglycidyl-(meth)acrylat, z.B. Methylglycidyl(meth)acrylat, Glycidyl- bzw. Alkylglycidyl(meth)acrylamid, ein Monoalkylglycidylfumarsäureester, wie Monobutylglycidylfumarsäureester.

Weitere copolymerisierbare Monomere sind Monomere mit blockierten Isocyanatgruppen, wie blockiertes (z.B. mit Caprolactam) Isocyanatoethyl(meth)acrylat, ferner Aminoalkylverbindungen, wie Dimethylaminoethyl(meth)acrylat und tert.-Butylaminoethyl(meth)acrylat, N-Alkoxyalkylamide, wie Methoxy- oder Ethoxymethyl(meth)acrylamid, Hydroxyalkylester, wie Hydroxyethyl- und Hydroxypropyl(meth)acrylat, ferner die entsprechenden Verbindungen der genannten ( Meth)acrylsäurederivate von anderen ethylenisch ungesättigten Säuren, wie Malein-, Fumar-, Itacon-, Croton- und Sorbinsäure.

Die Mengenverhältnisse der Komponenten i) und ii) können in weiten Grenzen schwanken, je nach dem ob weiche oder harte gegebenenfalls flexible Polymerisateigenschaften gefordert werden. Vorzugsweise werden 10 bis 90 Gew.-% der Komponente i) mit 90 bis 10 Gew.-% der Monomeren ii) umgesetzt, wobei die Mengenverhältnisse auf den Gesamtfeststoffgehalt der Komponenten bezogen sind.

Bevorzugte Dispersionscopolymerisate können als Monomereinheiten bezogen auf die Menge der Komponente ii) bis zu 100 Gew.-% Methylmethacrylat und/oder n-Butylacrylat, 0 bis 20 Gew.-% Hydroxyethylmethacrylat, 0 bis 20 Gew.-% Glycidylmethacrylat und 0 bis 20 Gew.-% Acrylsäure und/oder Methacrylsäure enthalten, wobei die Summe der Monomereinheiten stets 100% ist. Besonders bevorzugt ist ein Mischungsverhaltnis, das 15 bis 80 Gew.-% Methylmethacrylat, 15 bis 50 Gew.-% n-Butylacrylat, 0 bis 15 Gew.-% Hydroxyethylmethacrylat, 0 bis 15 Gew.-% Glycidylmethacrylat und 0 bis 5 Gew.-% Acrylsäure und/oder Methacrylsäure als Monomereinheiten enthält.

Die Herstellung der Dispersion B) wird als Emulsionspolymerisation in wäßrigem Medium bei Temperaturen im Bereich zwischen 0 bis 150 °C. vorzugsweise 20 und 100 °C, insbesondere 40 und 90 °C, gegebenenfalls unter Druck, durchgeführt. Die Komponente i) wird beispielsweise als 5 bis 65 gew.-%iges wäßriges System vorgelegt und dann mit den Vinylmonomeren ii) unter Zusatz eines Polymerisationsinitiators und gegebenenfalls weiterer üblicher Zusätze wie Emulgatoren und/oder Schutzkolloiden sowie Molekulargewichtsreglern polymerisiert. Das wäßrige Medium des Polymerisationsansatzes kann aus den wäßrigen Systemen der Komponente i) stammen, im allgemeinen wird jedoch noch Wasser dem Ansatz zugegeben, um die besten Bedingungen für die Emulsionspolymerisation zu erreichen.

Die Polymerisation kann wie in der DE-OS 28 11 913 beschrieben durchgeführt werden.

Für die Polymerisation werden gegebenenfalls übliche Hilfsmittel eingesetzt, wie übliche Polymerisationsinitiatoren, Emulgatoren und/oder Schutzkolloide und/oder übliche Molekulargewichtsregler.

Die vorstehenden Polymerisat- bzw. Bindemitteldispersionen sind physikalisch trocknend, d. h. sie trocknen bei niedrigen Temperaturen. Es können gegebenenfalls auch Vernetzungsmittel mit geeigneten

funktionellen Gruppen zugesetzt werden, die zu einer Fremdvernetzung führen, zum Beispiel beim forcierten Trocknen, wie Erwärmen und Einbrennen. Sie können auch funktionelle Gruppen enthalten, die zu einer Selbstvernetzung geeignet sind.

Die erfindungsgemäßen Überzugsmittel enthalten bevorzugt 5 bis 30 Gew.-%, bezogen das gesamte Überzugsmittel, des die Komponenten A) und B) enthaltenden Bindemittels.

Der Wasseranteil der erfindungsgemäßen Überzugsmittel beträgt 40 bis 85 Gew.-%, bevorzugt 55 bis 80 Gew.-%, jeweils bezogen auf das gesamte Bindemittel. Der Wasseranteil hängt von der jeweiligen Vertriebs- und/oder Applikationsform ab. Beispielsweise kann der Wasseranteil bis zu 70 Gew.-% betragen und vor der Applikation auf bis zu 85 Gew.-% erhöht werden.

Zur Verbesserung der Rheologie können die erfindungsgemäßen Überzugsmittel 1 bis 20 Gew.-%, bevorzugt 8 bis 15 Gew.-%, jeweils bezogen auf das gesamte Überzugsmittel eines oder mehrerer Lösemittel, enthalten. Als Lösemittel kommen organische Lösemittel in Frage, wie sie beispielsweise auf dem Lacksektor als Lacklösemittel und/oder Zusätze zu wäßrigen Überzugsmitteln üblich sind. Geeignet sind beispielsweise aromatische Lösungsmittel, wie Xylol, Ester, wie Butylacetat, Ether, wie Ethylenglykolmonobutylether (Butylglykol).

Die erfindungsgemäßen Überzugsmittel sind besonders geeignet für die Herstellung von unifarbenen Überzügen. In Abhängigkeit von der jeweiligen Formulierung können sie auch zur Herstellung von Metallicüberzügen verwendet werden.

Die erfindungsgemäßen Überzugsmittel enthalten ein oder mehrere Pigmente. Diese liegen in Mengen von 2 bis 25 Gew.-%, bevorzugt 5 bis 20 Gew.-%, bezogen auf das gesamte Überzugsmittel, vor. Bei den Pigmenten kann es sich um deckende, transparente oder effektgebende Pigmente handeln. Die Pigmente können löslich oder unlöslich sein. Es handelt sich um die üblichen anorganischen und organischen Pigmente, wobei auch Weißpigmente, wie Titandioxid, einbezogen sind. Als effektgebende Pigmente kommen beispielsweise Perlglanzpigmente, wie Iriodinpigmente, in Frage. Zu den Pigmenten sollen auch übliche anorganische oder organische Füllstoffe zählen, wie sie dem Fachmann auf dem Lackgebiet geläufig sind. Die Pigmente können in mit einem üblichen Anreibeharz angeriebener Form eingesetzt werden.

Die erfindungsgemäßen Überzugsmittel enthalten Neutralisationsmittel zur teilweisen oder vollständigen Neutralisation von neutralisierbaren Gruppen. Der Neutralisationsgrad neutralisierbarer Gruppen beträgt bevorzugt 40 bis 120 % der neutralisierbaren Gruppen und liegt bevorzugt unter 100 %.

Als Neutralisationsmittel für saure Gruppen kommen auf dem Lacksektor übliche Basen in Frage, wie die vorstehend angegebenen Amine, Ammoniak oder Alkanolamine, wie N,N-Dimethylethanolamin.

Die erfindungsgemäßen Überzugsmittel enthalten gegebenenfalls übliche Additive und Hilfsstoffe, wie sie auf dem Lacksektor eingesetzt werden. Derartige Hilfsmittel und Additive sind Verdicker, die Rheologie beeinflußende Zusätze, Antischaummittel, Korrosionsinhibitoren (beispielsweise zur Inhibierung der Gasung von Metallpigmenten: Al-Gasung). Die Additive und Hilfsstoffe werden in üblichen, dem Fachmann geläufigen Mengen, je nach gewünschtem Effekt zugesetzt.

Zur Herstellung werden die Komponenten der Überzugsmittel in den gewünschten Mengenanteilen miteinander vermischt.

Die erfindungsgemäßen Überzugsmittel können auf verschiedene Substrate nach üblichen Beschichtungsverfahren aufgebracht werden, beispielsweise durch Spritzen, Streichen oder Rakeln. Als Substrate kommen verschiedene Materialien in Frage, wie Metalle, Kunststoffe, jedoch auch Holz, Glas und andere Substrate. Die erfindungsgemäßen Überzugsmittel sind besonders geeignet zur Herstellung von Uni-Beschichtungen.

Die erfindungsgemäßen Überzugsmittel sind physikalisch trocknend, d. h. sie erfordern kein Einbrennen und können beispielsweise bei Temperaturen in der Größenordnung von 20 bis 60 °C, bevorzugt von 20 bis 40 °C, getrocknet werden. Die durch physikalische Trocknung erzielten Überzüge sind klebefrei.

Die erfindungsgemäßen Überzugsmittel sind wie vorstehend erwähnt besonders für die Herstellung von unifarbenen Überzügen geeignet. An derartige Überzugsmittel werden hohe Anforderungen gestellt, die sich von denen unterscheiden, die an Überzugsmittel für Metallic-Überzüge üblich sind. Überzugsmittel für unifarbene Überzüge müssen höher pigmentierbar sein, und auch bei hohen Schichtdicken gute mechanische, chemische und optische Eigenschaften aufweisen, wie hohe Härte, bei guter Elastizität, Wasserfestigkeit und Glanz. Es muß eine hohe Pigmentierbarkeit gegeben sein. Die Schichtdicken liegen erfindungsgemäß bei Unilackierung in der Größenordnung von 20 bis 50 µm. Die Pigmentierungshöhe (das Verhältnis von Bindemittel zu Pigment) liegt in der Größenordnung von 10:1 bis 1:2 (bezogen auf das Festkörpergewicht).

Die erfindungsgemäßen Überzugsmittel können nach dem Aufbringen mit Decklacken, insbesondere transparenten Decklacken, beschichtet werden. Die Beschichtung mit Decklacken kann naß-in-naß, nach

kurzem Ablüften oder nach Trocknen der erfindungsgemäß erstellten Basis-Lackschicht erfolgen. Die Trocknung der Decklackschicht kann gemeinsam mit der Lackschicht aus dem erfindungsgemäßen Überzugsmittel durchgeführt werden. Als Decklacke kommen übliche, insbesondere transparente Lacke, in Frage, wie sie beispielsweise auf dem Kraftfahrzeugsektor üblich sind. Es handelt sich dabei vorwiegend um Lacke auf Lösungsmittelbasis, jedoch können auch Decklacke auf wäßriger Basis verwendet werden.

Die erfindungsgemäßen Überzugsmittel können, wie vorstehend erwähnt, auf verschiedensten Substraten angewendet werden. Sie eignen sich besonders zur Herstellung von Uni-Basisschichten in Mehrschicht-Lackaufbauten. Hier kommt als bevorzugtes Anwendungsgebiet die Lackierung von Kraftfahrzeugen bzw. Kraftfahrzeugteilen in Frage. Durch die günstige physikalische Trocknung sind die erfindungsgemäßen Überzugsmittel besonders gut zur Herstellung von Reparaturlackierungen bzw. als Reparaturlacke geeignet.

Die folgenden Beispiele erläutern die Erfindung:

Herstellungsbeispiel 1:

Polyurethanpolyharnstoff-Dispersion A

Aus 850 Teilen eines Polycarbonats aus Hexandiol-1,6 (hergestellt durch die Reaktion von Hexandiol-1,6 und Diphenylcarbonat; Hydroxylzahl: 56, Molekulargewicht: ca. 2000), 67,5 Teilen eines monofunktionellen Polyetheralkohols der OH-Zahl 26, hergestellt durch Alkoxylierung von n-Butanol unter Verwendung eines Gemisches aus 83 % Ethylenoxid und 17 % Propylenoxid, 21,4 Teilen 2,2-Bishydroxymethylpropionsäure (DMPS) und 22,5 Teilen Butandiol-1,4 wird durch Umsetzung bei 100° C mit einem Gemisch aus 151,2 Teilen 1,6-Diisocyanatohexan (HDI) und 199,8 Teilen 3-Isocyanatomethyl-3,5,5-trimethylcyclohexylisocyanat (IPDI) ein Prepolymer gebildet, welches einen Gehalt an freien Isocyanatgruppen von etwa 5 % aufweist. Das Prepolymer wird in 2440 Teilen Aceton aufgelöst; die Lösung wird auf 50° C abgekühlt.

Aus 19,8 Teilen Ethylendiamin und 7,5 Teilen Hydrazinhydrat wird eine Lösung in 500 Teilen Wasser zubereitet. Diese Lösung wird langsam unter gutem Rühren zu der Prepolymerlösung gegeben; dabei entsteht eine dünnflüssige, weißlich-trübe Lösung. Nun werden 13,4 Teile N,N-Dimethylethanolamin zugesetzt. Unter starkem Rühren werden jetzt 1525 Teile entionisiertes Wasser zugegeben, dabei bildet sich eine opake blau-weiße Dispersion des Festkörpers. Durch Destillation im Vakuum wird aus dieser Dispersion das Aceton entfernt; zurück bleibt eine rein wäßrige Dispersion, die 40 % Feststoff enthält.

Der Festkörper der Dispersion enthält (mEq-% = Millläquivalentprozent pro 100 g Feststoff)
410 mEq-% Carbonatgruppen (-O-CO-O-)
148 mEq-% Urethangruppen (-NH-CO-O-)
95 mEq-% Harnstoffgruppen (-NH-CO-NH-)
243 mEq-% Urethan- und Harnstoffgruppen

Herstellungsbeispiel 2:

Herstellung der Komponente B

In eine Lösung von 141 g eines Polyesters (OHZ = 88), hergestellt auf der Basis von Phthalsäureanhydrid, Isophthalsäure, Maleinsäureanhydrid, Propanol und Glycerin, wie in der DE-OS 28 11 913 beschrieben, in 70 g Methylethylketon, wurden 100 g eines Anhydridgemischs ($SZ/H_2O = 486$), hergestellt durch Umsetzung von Trimellitsäureänhydrid mit Propandiol-1,2, bestehend somit aus Trimellitsäureanhydrid und Anhydriden der nachstehenden Formeln I und II

(I)

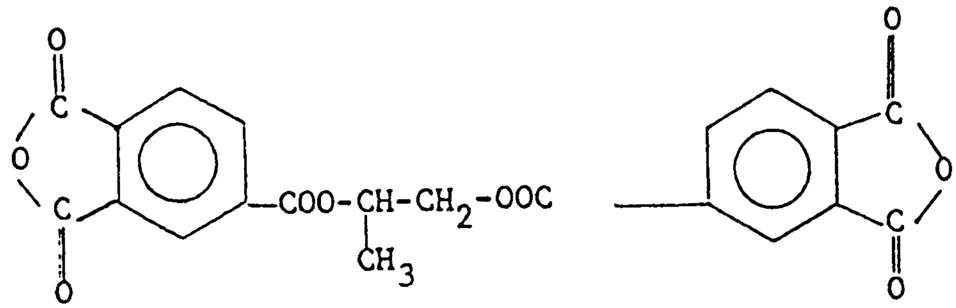

(II)

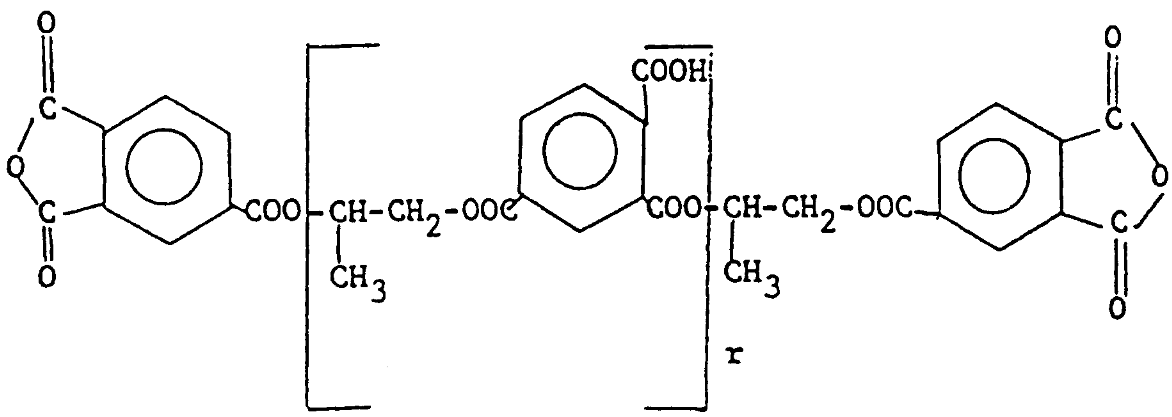

r = 1-8

die in 108 g Xylol bei 50 °C homogenisiert worden waren, innerhalb 1 Stunde zugetropft. Bei 90 °C wurde so lange gerührt, bis das Reaktionsgemisch eine Säurezahl in Wasser von 165 (100%iges Harz) erreicht hatte. Danach wurden 12 g Wasser zugemischt und nach 6stündigem Rühren bei 80 bis 90 °C eine Säurezahl in Butanol von 168 (100%iges Harz) erreicht. Die Gemischtemperatur wurde auf 60 °C gesenkt und nach Zugabe von 0,3 Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42g Dimethylamin (60%ig in Wasser) in 860 g Wasser eingerührt. Es wurde eine hellgelbe, opaleszierende Lösung erhalten, aus der bei 0,1 bar und 40 °C das organische Lösungsmittel abdestilliert wurde. Nach Filtration wurde eine gelbliche, praktisch klare wäßrige Harzlösung erhalten.

Festkörpergehalt : ca. 32% (1 Stunde bei 125 °C).

In einen Reaktor, ausgerüstet mit Rührer, Rückflußkühler, Innenthermometer und Dosiervorrichtung für die Monomeren, sowie den Initiator, wurden 705 g der vorstehenden wäßrigen (32%igen) Dispersion und 196g Wasser gefüllt. Diese Mischung wurde unter Rühren auf 80 °C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert. 10 Minuten nach Beendigung der Zugabe wurden weitere 0,2 g Ammoniumperoxydisulfat, gelöst in 10g Wasser, innerhalb von 10 Minuten zugesetzt und der Ansatz noch 2 Stunden bei 80 °C gerührt, um vollständigen Umsatz zu erzielen. Es resultierte eine stabile wäßrige Dispersion mit ca. 40% Feststoffgehalt.

Herstellungsbeispiel 3:

Herstellung von Uni-Wasserbasislacken

Aus den vorstehend hergestellten Dispersionen A bis C werden wäßrige Metallic-Basislacke mit den folgenden Bestandteilen hergestellt.

35,5[x)]Tle. der Dispersionen A und B
21,1[x)]Tle. Wasser
12,1 Tle. Butylglykol
1,3 Tle. eines handelsüblichen Verdickers
0,14 Tle. N,N-Dimethylethanolamin
22,1 Tle. eines handelsüblichen Titandioxid-Pigmentes
0,5 Tle. eines handelsüblichen Kupferphthalocyanin-Pigmentes
0,16 Tle. eines handelsüblichen Entschäumers
8,1 Tle. eines handelsüblichen PU-Anreibehilfsmittels
(FK 30 %)

Die resultierenden Uni-Basislacke zeigen eine Viskosität von ca. 40-50 sek. (DIN-Becher 4 mm-Düse, 23° C) und werden zum Erreichen der Spritzviskosität von ca. 20 sek. mit ca. 10-15 % Wasser verdünnt.

Mit den Dispersionen werden Lackierungen wie folgt durchgeführt:

Lackieraufbau der bewerteten Bleche:

- Blankgeschliffenes Karosserieblech
- Praxisübliche 2K-Epoxi-Haftgrundierung
- Praxisüblicher 2K-PU-Füller
- Wasserbasislack
- Praxisüblicher 2K-PU-Klarlack, Medium solid-Typ, FK 47 %

Applikation und Trocknung der Decklackschicht (Basislack + Klarlack):

- Spritzapplikation der Wasser-Basislacke wie in den Beispielen 1 bis 3 der folgenden Tabelle aufgeführt.
- 40 min Vortrocknung bei Raumtemperatur
- Spritzapplikation des Klarlackes
- 10 min Ablüften bei Raumtemperatur
- 45 min Trocknung bei 60° C

Erläuterung:

Tle = Gewichtsteile
2K = Zwei Komponenten
PU = Polyurethan

Die Eigenschaften der erhaltenen Lackierungen sind in der folgenden Tabelle dargestellt:

[x)] jeweils Dispersionen mit ca. 40 % Festkörper (FK); bei niedrigerem FK werden die Dispersions- und Wassermengen entsprechend korrigiert, so daß jeweils gebrauchsfertige Überzugsmittel mit dem gleichen FK-Gehalt resultieren.

Vergleichsprüfung Uni-Basislacke

| Beisp. | Bindemittel | Härte vor / nach F/W | Haftung vor / nach F/W | Fülle/Glanz nach F/W |
|---|---|---|---|---|
| 1 | Dispersion: Komponente A | 2 / 3-4 | 1 / 2-3 | 3 |
| 2 | Dispersion: Komponente B | 2-3 / 4 | 2-3 / 3 | 3 |
| 3 | Erfindungsgemäße Mischung der Komponenten A+B | 1-2 / 2- | 1 / 2 | 2- |

F/W = Schwitzwasserbeständigkeit DIN 50017 KK 72h

Noten: 1 = sehr gut, 2 = gut, 3 = bedingt brauchbar, 4 = unbrauchbar

Haftung: Gitterschnittmethode DIN 53151

**Patentansprüche**

1. Physikalisch trocknendes Überzugsmittel auf wäßriger Basis, enthaltend,
5 bis 30 Gew.-% eines Bindemittels, bei dem es sich um ein Gemisch handelt aus
A) 10 bis 90 Gew.-% eines oder mehrerer Carbonatgruppierungen enthaltender Polyurethane, mit einer Glasübergangstemperatur von < 0 °C, in Form einer wäßrigen Dispersion, und

B) 10 bis 90 Gew.-% eines oder mehrerer Reaktionsprodukte von carboxyfunktionellen Polykondensaten und $\alpha,\beta$-olefinisch ungesättigten Monomeren mit einer Glasübergangstemperatur von > 0 °C in Form einer wäßrigen Dispersion,

wobei sich die Gewichtsprozente der Komponenten A) und B) jeweils auf den Bindemittelfestkörper beziehen und auf 100 Gew.-% addieren,

40 bis 85 Gew.-% Wasser,

1 bis 20 Gew.-% eines oder mehrerer organischer Lösemittel,

2 bis 25 Gew.-% eines oder mehrerer färbender und/oder effektgebender Pigmente,

Neutralisationsmittel zur Erzielung eines Neutralisationsgrades der neutralisierten Gruppen des Bindemittels von 40 bis 120 %,

sowie gegebenenfalls übliche Additive und Hilfsstoffe,

wobei die Bindemittelkomponente

A) erhältlich ist durch Umsetzung von

a) 10 bis 40 Gew.-% eines oder mehrerer organischer Polyisocyanate, die keine hydrophilen oder in hydrophile Gruppen überfuhrbare Gruppen aufweisen,

b) 40 bis 80 Gew.-% einer oder mehrerer höhermolekularer organischer Polyhdroxylverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,

c) 0,2 bis 18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

d) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen und

e) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen,

und die Bindemittelkomponente

B) erhältlich ist durch Umsetzung von

i) 5 bis 95 Gew.-% eines carboxyfunktionellen Polykondensats, das zusätzlich Epoxygruppen enthält,

ii) 95 bis 5 Gew.-% mindestens eines copolymerisierbaren $\alpha,\beta$-olefinisch ungesättigten Monomeren, und

iii) 0 bis 20 Gew.-% üblicher Hilfsstoffe für die Polymerherstellung, wobei sich die Mengenangaben der Bestandteile i) bis iii) auf den Festkörperanteil der Komponente b) beziehen und ihre Summe stets 100 Gew.-% beträgt.

**2.** Physikalisch trocknendes Überzugsmittel nach Anspruch 1, worin die Komponente B iii) aus anionischen und/oder nicht-ionischen Emulgatoren und/oder Schutzkolloiden besteht.

**3.** Physikalisch trocknendes Überzugsmittel nach Anspruch 1 oder 2, worin die Komponente A) des Bindemittels ein oder mehrere Polyurethanharnstoffe sind.

**4.** Verfahren zur Herstellung eines überzugsmittels nach einem der Ansprüche 1 bis 3, dadurch gekennzeichnet, daß man die im Anspr angegebenen Komponenten in den in Anspruch 1 angegebenen Mengenanteilen, vermischt, wobei das färbende Pigment gegebenenfalls in angeriebener Form, eingesetzt wird.

**5.** Verwendung der physikalisch trocknenden Überzugsmittel nach Anspruch 1, 2 oder 3 zur Herstellung von Mehrschicht-Lackierungen.

**6.** Verwendung nach Anspruch 5 auf dem Kraftfahrzeugsektor.

**7.** Verwendung nach Anspruch 5 oder 6 zur Herstellung von Uni-Lackierungen für Reparaturzwecke.

**8.** Verfahren zur Herstellung eines physikalisch trocknenden Überzugsmittels auf wäßriger Basis, dadurch gekennzeichnet, daß man eine Komponente A) in Form eines oder mehrerer, Carbonatgruppierungen enthaltender Polyurethane, mit einer Glasübergangstemperatur von < 0 °C, als wäßrige Dispersion

herstellt durch Umsetzung von

a) 10 bis 40 Gew.-% eines oder mehrerer organischer Polyisocyanate, die keine hydrophilen oder in hydrophile Gruppen überführbare Gruppen aufweisen,

b) 40 bis 80 Gew.-% einer oder mehrerer höhermolekularer organischer Polyhydroxylverbindungen, die keine hydrophilen oder in hydrophile Gruppen überführbare Gruppen aufweisen, und die zumindest zu 50 Gew.-% aus einem oder mehreren Polyhydroxypolycarbonaten bestehen,

c) 0,2 bis 18 Gew.-% einer oder mehrerer niedermolekularer Verbindungen, die mindestens zwei gegenüber Isocyanatgruppen reaktionsfähige Gruppen, jedoch keine hydrophilen oder in hydrophile Gruppen überführbare Gruppen aufweisen,

d) 0 bis 8 Gew.-% einer oder mehrerer nicht-ionisch-hydrophiler Verbindungen, die mindestens eine Isocyanatgruppe oder mindestens eine gegenüber Isocyanatgruppen reaktionsfähige Gruppe aufweisen und

e) 1 bis 12 Gew.-% einer oder mehrerer Verbindungen, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen,

und daß man eine Bindemittelkomponente B) in Form eines oder mehrerer Reaktionsprodukte von carboxyfunktionellen Polykondensaten und $\alpha,\beta$-olefinisch ungesättigten Monomeren mit einer Glasübergangstemperatur von > 0 °C als wäßrige dispersion, herstellt durch Umsetzung von

i) 5 bis 95 Gew.-% eines carboxyfunktionellen Polykondensats, das zusätzlich Epoxygruppen enthält,

ii) 95 bis 5 Gew.-% mindestens eines copolymerisierbaren $\alpha,\beta$-olefinisch ungesättigten Monomeren, und

iii) 0 bis 20 Gew.-% üblicher Hilfsstoffe für die Polymerherstellung, wobei sich die Mengenangaben der Bestandteile i) bis iii) auf den Festkörperanteil der Komponente b) beziehen und ihre Summe stets 100 Gew.-% beträgt,

und daß man 10 bis 90 Gew.-% der Komponente A) mit 10 bis 90 Gew.-% der Komponente B) vermischt, wobei sich die Gewichtsprozente der Komponenten A) und B) jeweils auf den Bindemittelfestkörper beziehen und auf 100 Gew.-% addieren,

und daß man 5 bis 30 Gew.-% dieses Gemischs mit

40 bis 85 Gew.-% Wasser,

1 bis 20 Gew.-% eines oder mehrerer organischer Lösemittel,

2 bis 25 Gew.-% eines oder mehrerer färbender und/oder effektgebender Pigmente,

Neutralisationsmittel zur Erzielung eines Neutralisationsgrades der neutralisierten Gruppen des Bindemittels von 40 bis 120 %,

sowie gegebenenfalls üblichen Additiven und Hilfsstoffen vermischt.

## Claims

**1.** Water-based, physically drying coating composition containing,

5 to 30 wt.% of a binder comprising a mixture of

A) 10 to 90 wt.% of polyurethanes containing one or more carbonate groups and having a glass transition temperature of < 0 °C, in the form of an aqueous dispersion, and

B) 10 to 90 wt.% of one or more reaction products of carboxy-functional polycondensation products and $\alpha,\beta$-olefinically unsaturated monomers having a glass transition temperature of > 0 °C in the form of an aqueous dispersion,

wherein the weight percentages of components A) and B) relate in each case to the binder solids content and add up to 100 wt.%,

40 to 85 wt.% of water,

1 to 20 wt.% of one or more organic solvents,

2 to 25 wt.% of one or more coloured and/or effect pigments,

neutralising agent to achieve a degree of neutralisation of the neutralised groups of the binder of 40 to 120%,

optionally together with conventional additives and auxiliary substances,

wherein binder component

A) may be obtained by reacting

a) 10 to 40 wt.% of one or more organic polyisocyanates which have no groups which are hydrophilic or convertible into hydrophilic groups,

b) 40 to 80 wt.% of one or more relatively high molecular weight organic polyhydroxyl compounds which have no groups which are hydrophilic or convertible into hydrophilic groups and at least 50 wt.% of which consist of one or more polyhydroxy polycarbonates,

c) 0.2 to 18 wt.% of one or more low molecular weight compounds which have at least two groups capable of reacting with isocyanate groups, but no groups which are hydrophilic or convertible into hydrophilic groups,

d) 0 to 8 wt.% of one or more non-ionic hydrophilic compounds which have at least one isocyanate group or at least one group capable of reacting with isocyanate groups and

e) 1 to 12 wt.% of one or more compounds which have, in addition to at least one ionic group or at least one group convertible into an ionic group, at least one hydrogen atom capable of reacting with isocyanate groups,

and binder component

B) may be obtained by reacting

i) 5 to 95 wt.% of a carboxy-functional polycondensation product which additionally contains epoxy groups,

ii) 95 to 5 wt.% of at least one copolymerisable $\alpha,\beta$-olefinically unsaturated monomer, and

iii) 0 to 20 wt.% of conventional auxiliary substances for polymer production, wherein the stated quantities of constituents i) to iii) relate to the solids content of component b) and the sum thereof is always 100 wt.%.

**2.** Physically drying coating composition according to claim 1, in which component B iii) consists of anionic and/or non-ionic emulsifiers and/or protective colloids.

**3.** Physically drying coating composition according to claim 1 or 2, in which component A) of the binder comprises one or more polyurethaneureas.

**4.** Process for the production of a coating composition according to one of claims 1 to 3, characterised in that the components stated in claim are mixed together in the quantities stated in claim 1, wherein the colouring pigment is optionally used in ground form.

**5.** Use of the physically drying coating compositions according to claim 1, 2 or 3 for the production of multi-layer lacquer coatings.

**6.** Use according to claim 5 in the automotive sector.

**7.** Use according to claim 5 or 6 for the production of plain lacquer coatings for repair purposes.

**8.** Process for the production of a water-based physically drying coating composition, characterised in that component A) in the form of polyurethanes containing one or more carbonate groups and having a glass transition temperature of < 0 °C, is produced as an aqueous dispersion by reacting

a) 10 to 40 wt.% of one or more organic polyisocyanates which have no hydrophilic groups or groups convertible into hydrophilic groups,

b) 40 to 80 wt.% of one or more relatively high molecular weight organic polyhydroxyl compounds which have no groups which are hydrophilic or convertible into hydrophilic groups and at least 50 wt.% of which consist of one or more polyhydroxy polycarbonates,

c) 0.2 to 18 wt.% of one or more low molecular weight compounds which have at least two groups capable of reacting with isocyanate groups, but no groups which are hydrophilic or convertible into hydrophilic groups,

d) 0 to 8 wt.% of one or more non-ionic hydrophilic compounds which have at least one isocyanate group or at least one group capable of reacting with isocyanate groups and

e) 1 to 12 wt.% of one or more compounds which have, in addition to at least one ionic group or at least one group convertible into an ionic group, at least one hydrogen atom capable of reacting with isocyanate groups,

and that a binder component B) in the form of one or more reaction products of carboxy-functional polycondensation products and $\alpha,\beta$-olefinically unsaturated monomers having a glass transition temperature of > 0 °C is produced as an aqueous dispersion by reacting

i) 5 to 95 wt.% of a carboxy-functional polycondensation product which additionally contains epoxy groups,

ii) 95 to 5 wt.% of at least one copolymerisable $\alpha,\beta$-olefinically unsaturated monomer, and

iii) 0 to 20 wt.% of conventional auxiliary substances for polymer production, wherein the stated quantities of constituents i) to iii) relate to the solids content of component b) and the sun thereof is always 100 wt.%,

and that 10 to 90 wt.% of component A) is mixed with 10 to 90 wt.% of component B), wherein the weight percentages of components A) and B) relate in each case to the binder solids content and add up to 100 wt.%,

and that 5 to 30 wt.% of this mixture is mixed with

40 to 85 wt.% of water,

1 to 20 wt.% of one or more organic solvents,

2 to 25 wt.% of one or more coloured and/or effect pigments,

neutralising agent to achieve a degree of neutralisation of the neutralised groups of the binder of 40 to 120%,

optionally together with conventional additives and auxiliary substances.

**Revendications**

1. Compositions de revêtement à base aqueuse, séchant physiquement, contenant

5 à 30 % en poids d'un liant, pour lequel il s'agit d'un mélange de

A) 10 à 90 % en poids, de préférence 50 à 90 % en poids, de polyuréthannes contenant un ou plusieurs groupes carbonate ayant une température de transition vitreuse < 0 °C, de préférence < -10 °C, et plus particulièrement < -20 °C, sous forme d'une dispersion aqueuse, et

B) 10 à 90 % en poids, de préférence 10 à 50 % en poids, d'un ou plusieurs produits de réaction insaturés de polycondensats carboxyfonctionnels et de monomères à insaturations $\alpha,\beta$-oléfiniques ayant une température de transition vitreuse > 0 °C, de préférence > 10 °C, et plus avantageusement encore > 20 °C, sous forme d'une dispersion aqueuse,

tandis que les pourcentages en poids des composants A) et B) se rapportent à chaque fois aux solides du liant et s'additionnent pour donner 100 %,

40 à 85 % en poids d'eau,

1 à 20 % en poids d'un ou plusieurs solvants organiques,

2 à 25 % en poids d'un ou plusieurs pigments colorants ou procurant un effet,

des agents de neutralisation pour atteindre un degré de neutralisation des groupes neutralisés du liant de 40 à 120 %,

ainsi qu'éventuellement des additifs et adjuvants classiques,

tandis que le composant du liant

A) peut être obtenu par réaction de

a) 10 à 40 % en poids d'un ou plusieurs polyisocyanates organiques, ne présentant pas de groupes hydrophiles ou susceptibles d'être transformés en des groupes hydrophiles,

b) 40 à 80 % en poids d'un ou plusieurs composés polyhydroxylés organiques de masse moléculaire élevée, ne présentant pas de groupes hydrophiles ou susceptibles d'être transformés en des groupes hydrophiles, et consistant pour au moins 50 % en poids en un ou plusieurs polyhydroxypolycarbonates,

c) 0,2 à 18 % en poids d'un ou plusieurs composés de faible masse moléculaire, présentant au moins deux groupes pouvant réagir avec des groupes isocyanates, mais pas de groupes hydrophiles ou pouvant être transformés en des groupes hydrophiles,

d) 0 à 8 % en poids d'un ou plusieurs composés non-ioniques-hydrophiles, présentant au moins un groupe isocyanate ou au moins un groupe pouvant réagir avec des groupes isocyanates et

e) 1 à 12 % en poids d'un ou plusieurs composés présentant, outre au moins un groupe ionique ou au moins un un groupe pouvant se transformer en un groupe ionique, au moins un atome d'hydrogène susceptible de réagir avec des groupes isocyanates,

et le composant de liant

B) peut être obtenu par réaction de

i) 5 à 95 % en poids d'un polycondensat carboxyfonctionnel, qui contient en outre des groupes époxy,

ii) 95 à 5 % en poids d'au moins un monomère à insaturations $\alpha,\beta$-oléfiniques copolymérisable, et

iii) 0 à 20 % en poids d'adjuvants classiques pour la préparation des polymères, tandis que les indications de quantités des constituants i) à iii) se rapportent à la fraction de solide du

composant b) et que leur somme est toujours de 100 % en poids.

**2.** Compositions de revêtement à base aqueuse, séchant physiquement, selon la revendication 1, dans lesquelles le composant B) iii) consiste en des émulsifiants anioniques et/ou non-ioniques et/ou des colloïdes protecteurs.

**3.** Compositions de revêtement à base aqueuse, séchant physiquement, selon l'une des revendications 1 ou 2, dans lesquelles les composants A) du liant sont une ou plusieurs polyuréthanne-urées.

**4.** Procédé pour la préparation d'une composition de revêtement selon l'une quelconque des revendications 1 à 3, caractérisé en ce qu'on mélange les composants mentionnés dans la revendication dans les proportions indiquées dans la revendication 1, tandis qu'on introduit le pigment de coloration éventuellement sous forme broyée.

**5.** Utilisation des compositions de revêtement séchant physiquement selon l'une quelconque des revendications 1, 2 ou 3 pour la préparation de laquages multi-couches.

**6.** Utilisation selon la revendication 5 dans le secteur des véhicules automobiles.

**7.** Utilisation selon l'une des revendications 5 ou 6 pour la préparation de laquages d'une couleur unie à des fins de réparation.

**8.** Procédé pour la préparation d'une composition de revêtement à base aqueuse, séchant physiquement, caractérisé en ce qu'on prépare en dispersion aqueuse un composant A), sous forme de polyuréthannes contenant un ou plusieurs groupements carbonate, ayant une température de transition vitreuse < 0 °C, par réaction de

a) 10 à 40 % en poids d'un ou plusieurs polyisocyanates organiques, ne présentant pas de groupes hydrophiles ou susceptibles d'être transformés en des groupes hydrophiles,
b) 40 à 80 % en poids d'un ou plusieurs composés polyhydroxylés organiques de masse moléculaire élevée, ne présentant pas de groupes hydrophiles ou susceptibles d'être transformés en des groupes hydrophiles, et consistant pour au moins 50 % en poids en un ou plusieurs polyhydroxypolycarbonates,
c) 0,2 à 18 % en poids d'un ou plusieurs composés de faible masse moléculaire, présentant au moins deux groupes pouvant réagir avec des groupes isocyanates, mais pas de groupes hydrophiles ou susceptibles d'être transformés en des groupes hydrophiles,
d) 0 à 8 % en poids d'un ou plusieurs composés non-ioniques-hydrophiles, présentant au moins un groupe isocyanate ou au moins un groupe susceptible de réagir avec des groupes isocyanates et
e) 1 à 12 % en poids d'un ou plusieurs composés présentant, outre au moins un groupe ionique ou au moins un un groupe pouvant se transformer en un groupe ionique, au moins un atome d'hydrogène susceptible de réagir avec des groupes isocyanates,

et qu'on prépare un composant de liant B) sous forme d'un ou plusieurs produits de réaction de polycondensats carboxyfonctionnels et de monomères à insaturations $\alpha,\beta$-oléfiniques avec une température de transition vitreuse > 0 °C sous forme de dispersion aqueuse, par réaction de

i) 5 à 95 % en poids d'un polycondensat carboxyfonctionnel, qui contient en outre des groupes époxy,
ii) 95 à 5 % en poids d'au moins un monomère à insaturations $\alpha,\beta$-oléfiniques copolymérisable, et
iii) 0 à 20 % en poids d'adjuvants classiques pour la préparation des polymères, tandis que les indications de quantités des constituants i) à iii) se rapportent à la fraction de solide du composant b) et que leur somme est toujours de 100 % en poids,

et qu'on mélange 10 à 90 % en poids du composant A) avec 10 à 90 % en poids du composant B), tandis que les pourcentages en poids des composants A) et B) se rapportent à chaque fois au solide du liant et s'additionnent pour donner 100 %,
et qu'on mélange 5 à 30 % en poids de ce mélange avec 40 à 85 % en poids d'eau,
1 à 20 % en poids d'un ou plusieurs solvants organiques, 2 à 25 % en poids d'un ou plusieurs pigments colorants ou procurant un effet,
des agents de neutralisation pour atteindre un degré de neutralisation des groupes neutralisés du liant de 40 à 120 %,
ainsi qu'éventuellement des additifs et adjuvants classiques.